# EUROPEAN PATENT APPLICATION

(11) **EP 4 750 149 A1**
(43) Date of publication of application: **27.05.2026**
(21) Application number: 24842190.1
(22) Date of filing: 02.07.2024
(51) Int. Cl.: H04W 36/00

(54) **COMMUNICATION METHOD AND APPARATUS, AND COMPUTER READABLE STORAGE MEDIUM**

(30) Priority: 19.07.2023 CN 202310892027
(71) Applicant: Spreadtrum Communications (Shanghai) Co., Ltd., Shanghai 201203 (CN)
(72) Inventor: DENG, Yun, Shanghai 201203 (CN)
(74) Representative: Ipsilon
(86) International application number: PCT/CN2024/103059
(87) International publication number: WO 2025/016194

(57) **Abstract**

The present application provides a communication method and apparatus, a computer-readable storage medium. The communication method comprises: reporting first information, wherein the first information comprises information related to conditional primary cell handover and/or conditional primary secondary cell addition/change in a dual-connectivity scenario. The present application provides a solution for assisting a terminal device to perform dual-connectivity conditional handover. A network device can analyze the problem of existing dual-connectivity conditional handover on the basis of the first information and optimize the dual-connectivity conditional handover, so that the terminal device could then successfully complete dual-connectivity handover.

## Description

The present application claims priority to CN Patent Application No. 202310892027.5, entitled "COMMUNICATION METHOD AND APPARATUS, AND COMPUTER-READABLE STORAGE MEDIUM", and filed with the China National Intellectual Property Administration on July 19, 2023, the entire contents of which are incorporated herein by reference.

### FIELD OF TECHNOLOGY

The present application relates to the field of communication technology, and particularly to a communication method and apparatus, and computer-readable storage medium.

### BACKGROUND

In New Radio (NR) Release 18 (R18), conditional handovers for dual-connectivity have been introduced to enhance mobility performance, including Conditional HandOver (CHO), Conditional Primary Secondary Cell (PSCell) Addition (CPA), and Conditional PSCell Change (CPC).Among these, CHO is directed to a conditional Primary Cell (PCell) handover, while CPA/CPC is directed to a conditional PSCell update. Strictly speaking, the conditional PSCell update is distinct from conventional handovers. Conditional PSCell update is also referred to as a conditional handover in this disclosure for simplicity.A recent agreement states that the terminal device continues to evaluate execution conditions for both CHO and CPA/CPC when the execution condition for CPA/CPC is satisfied but the execution condition for CHO is not satisfied.For CHO plus CPC (i.e., a candidate PCell and a candidate PSCell are configured concurrently), execution for CHO and CPC is considered only when both execution conditions are satisfied. (When the execution condition for CHO is satisfied but the execution condition for CPC is not satisfied, if there is an CHO in which only configuration for conditional handover for candidate PCell is included or there is an CHO in which configuration for conditional handover for Secondary Cell Group (SCG) is included but without corresponding handover condition (i.e., update condition), the terminal device shall execute the CHO or the CHO with SCG, and the network side can handle this situation by providing appropriate configurations.

When the network side configures both CHO and CPA/CPC for the terminal device, the terminal device performs the handover to access qualified PCell and PSCell concurrently only if the candidate PCell and the candidate PSCell satisfy their respective execution conditions for handover.

However, in real network configurations, parameters setting may be unreasonable, which could prevent the terminal device from implementing handovers such as CHO and/or CPA/CPC successfully.

### SUMMARY

The present application provides a communication method and a communication apparatus, providing a solution that assists a terminal device in performing a conditional handover in dual-connectivity, which enables a network device to analyze existing problems in the conditional handover in dual-connectivity on the first information and optimize configurations for the conditional handover in dual-connectivity, and facilitates subsequent conditional handover in dual-connectivity by numerous terminal devices.

In order to achieve the above one or more objectives, the present application provides the following technical solutions.

In a first aspect, a communication method is provided. The communication method comprises: reporting first information which includes information related to Conditional PCell Handover and/or Conditional PSCell Addition/Change in a dual-connectivity scenario.

Alternatively, the first information includes one or more of: a first time instant when a candidate PCell satisfies a handover condition for PCell and a second time instant when a candidate PSCell satisfies a handover condition for PSCell, a time interval between the first time instant and the second time instant, a time interval between a third time instant when the candidate PCell satisfies the handover condition for PCell and the candidate PSCell satisfies the handover condition for PSCell and a fourth time instant when configurations for the Conditional PCell Handover and the Conditional PSCell Handover are received, a time interval between the first time instant and the fourth time instant, and a time interval between the second time instant and the fourth time instant.

Alternatively, the first information includes information on quality of signal of the other corresponding cell when one of the handover condition for PCell and the handover condition for PSCell is satisfied.

Alternatively, the first information includes information on quality of signal of a candidate PSCell at a time instant when a candidate PCell satisfies the handover condition for PCell; or the first information includes information on quality of signal of a candidate PCell at a time instant when a candidate PSCell satisfies the handover condition for PSCell.

Alternatively, the information on quality of signal of the cell includes one or more of: a value of signal of the cell, a difference value between the value of the signal of the cell and an entry condition of an event included in a handover condition, a duration for which the value of the signal of the cell has met the entry condition of the event included in the handover condition, and an expected time length to satisfaction of the handover condition, wherein the expected time length represents a difference value between the duration and a time length to trigger included in the handover condition.

Alternatively, the first information includes whether the handover condition for PCell is satisfied and/or whether the handover condition for PSCell is satisfied in case of a failure of radio link or a failure of handover.

Alternatively, the first information includes a satisfaction time instant when one of the handover condition for PCell and the handover condition for PSCell is satisfied and a fifth time instant when the failure of radio link occurs, and/or a time interval between the satisfaction time instant and the fifth time instant.

Alternatively, the first information includes a reason for failure and/or indication information in case of a failure of radio link or a failure of handover, the reason for failure includes absence of configuration for a separate handover command for the Conditional PCell Handover, and the indication information is used to indicate that only the handover condition for PSCell is satisfied or only the handover condition for PCell is satisfied.

Alternatively, configurations for a conditional handover in dual-connectivity include one or more groups of cells, each group of cells includes at least one candidate PCell and at least one candidate PSCell; wherein reporting the first information comprises:reporting first information for at least one group of cells.

Alternatively, reporting the first information comprises:sending higher-layer signaling which includes the first information.

In a second aspect, the present application also discloses a communication method. The communication method comprises:receiving first information which includes information related to Conditional PCell Handover and/or Conditional PSCell Addition/Change in a dual-connectivity scenario.

Alternatively, the first information includes one or more of: a first time instant when a candidate PCell satisfies a handover condition for PCell and a second time instant when a candidate PSCell satisfies a handover condition for PSCell, a time interval between the first time instant and the second time instant, a time interval between a third time instant when the candidate PCell satisfies the handover condition for PCell and the candidate PSCell satisfies the handover condition for PSCell and a fourth time instant when configurations for the Conditional PCell Handover and the Conditional PSCell Handover are received, a time interval between the first time instant and the fourth time instant, and a time interval between the second time instant and the fourth time instant.

Alternatively, the first information includes information on quality of signal of the other corresponding cell when one of the handover condition for PCell and the handover condition for PSCell is satisfied.

Alternatively, the first information includes whether the handover condition for PCell is satisfied and/or whether the handover condition for PSCell is satisfied in case of a failure of radio link or a failure of handover.

Alternatively, the first information includes a reason for failure and/or second indication information in case of a failure of radio link or a failure of handover, the reason for failure includes absence of configuration for a separate handover command for the Conditional PCell Handover, and the second indication information is used to indicate that only the handover condition for PSCell is satisfied or only the handover condition for PCell is satisfied.

In a third aspect, the present application further discloses a communication apparatus. The communication apparatus comprises:a communication module configured to report first information which includes information related to Conditional PCell Handover and/or Conditional PSCell Addition/Change in a dual-connectivity scenario.

In a fourth aspect, the present application further discloses a communication apparatus. The communication apparatus comprises:a communication module configured to receive first information which includes information related to Conditional PCell Handover and/or Conditional PSCell Addition/Change in a dual-connectivity scenario.

In a fifth aspect, a computer-readable storage medium is provided, which stores computer programs. The computer programs, when executed by a processor, cause any one of the methods provided in the first aspect or the second aspect to be performed.

In a sixth aspect, a communication apparatus is provided, which comprises a memory and a processor. The memory stores thereon computer programs executable on the processor. The computer programs, when executed by the processor, cause any one of the methods provided in the first aspect to be performed.

In a seventh aspect, a communication apparatus is provided, which comprises a memory and a processor, wherein the memory stores thereon computer programs executable on the processor, the communication apparatus characterized in that the computer programs, when executed by the processor, cause any one of the methods provided in the second aspect to be performed.

In an eighth aspect, a computer program product is provided, which stores computer programs thereon. The computer programs, when executed by a processor, cause any one of the methods provided in the first aspect or the second aspect to be performed.

In a ninth aspect, a communication system is provided, which comprises the above terminal device and the above network device.

In a tenth aspect, an embodiment of the present application also provides a chip (also referred as an apparatus for data transmission) which has computer programs stored thereon. The computer programs, when executed by the chip, cause the steps of the above methods to be performed.

In an eleventh aspect, an embodiment of the present application further provides a chip system for use in a terminal. The chip system comprises at least one processor and an interface circuit, wherein the interface circuit is interconnected with the at least one processor via links. The at least one processor is configured to execute instructions to perform any one of the methods provided in the first aspect or the second aspect.

Compared with the prior art, the technical solutions of the present application have the following positive effects.

In the technical solution of the present application, the terminal device reports, to the network side, first information which includes information related to Conditional PCell Handover and/or Conditional PSCell Addition/Change in a dual-connectivity scenario.In the technical solutions of the present application, the terminal device is configured to report the first information, which assists the network side to promptly learn effectiveness of configuration parameters for a conditional handover in dual-connectivity, analyze existing problems in a conditional handover in dual-connectivity. The network side is enabled to adjust the parameter configurations in time to achieve reasonable configurations for a subsequent conditional handover in dual-connectivity, allowing subsequent successful handover in a dual-connectivity by numerous terminal devices and improving communication performance.

Further, the first information includes one or more of: a first time instant when a candidate PCell satisfies the handover condition for PCell and a second time instant when a candidate PSCell satisfies the handover condition for PSCell, a time interval between the first time instant and the second time instant, a time interval between a third time instant when the candidate PCell satisfies the handover condition for PCell and the candidate PSCell satisfies the handover condition for PSCell and a fourth time instant when configurations for the Conditional PCell Handover and the Conditional PSCell Handover are received, a time interval between the first time instant and the fourth time instant, and a time interval between the second time instant and the fourth time instant. In the technical solutions of the present application, the first information is configured as above, which enables the network side to analyze whether the configured parameters such as duration of the entry condition of the event included in the handover condition are reasonable based on the above first information, facilitating a more reasonable configuration for the parameters by the network side and timely handover in dual-connectivity by terminal devices, further improving mobility performance.

Further, the first information includes information on quality of signal of the other corresponding cell when one of the handover condition for PCell and the handover condition for PSCell is satisfied.In the technical solutions of the present application, the first information is configured as above, which enables the network side to analyze whether the configured parameters such as the entry condition of the event included in the handover condition are reasonable based on the above first information, facilitating a more reasonable configuration for the parameters by the network side and easier handover in dual-connectivity by the terminal devices, further improving mobility performance.

Further, the first information includes whether the handover condition for PCell is satisfied and/or whether the handover condition for PSCell is satisfied in case of a failure of radio link or a failure of handover. There are various causes for the failure of radio link or the failure of handover. In the technical solutions of the present application, the first information is recorded and reported as above, which enables the network device to learn the specific cause for the failure of radio link or the failure of handover in time, facilitating targeted adjustments to configurations for parameters for a subsequent conditional handover in dual-connectivity by the network device and successful subsequent handover in dual-connectivity by the terminal devices, further improving communication performance.

### BRIEF DESCRIPTION OF THE DRAWINGS

FIG. 1 is an interaction flowchart of a communication method provided by an embodiment of the present application;
FIG. 2 is an interaction flowchart of another communication method provided by an embodiment of the present application;
FIG. 3 is an interaction flowchart of yet another communication method provided by an embodiment of the present application;
FIG. 4 is an interaction flowchart of yet another communication method provided by an embodiment of the present application;
FIG. 5 is a schematic structural diagram of a communication apparatus provided by an embodiment of the present application; and
FIG. 6 is a schematic structure diagram of a hardware of a communication apparatus provided by an embodiment of the present application.

### DETAILED DESCRIPTION

The communication systems suitable for the embodiments of the present application include, but are not limited to, Long Term Evolution (LTE) systems, the fifth-generation (5G) systems, New Radio (NR) systems, and future evolved systems or various integrated communication systems.Among them, the 5G system may be a Non-Standalone (NSA) 5G system or a StandAlone (SA) 5G system.The technical solutions of the present application may also be applied to different network architectures, including but not limited to a relay network architecture, a dual-connectivity architecture, a Vehicle-to-Everything architecture, etc.

The present application primarily relates to communications between a terminal device and a network device. Wherein:
The network device in the embodiments of the present application may also be referred to as an access network device. For example, it may be a Base Station (BS) (also referred to as base station device). A network device is an apparatus deployed in a Radio Access Network (RAN) to provide functions of wireless communication. For example, the device providing functions of a base station in a second-generation (2G) network includes a Base Transceiver Station (BTS). The device providing functions of a base station in a third-generation (3G) network includes a NodeB. The device providing functions of a base station in a fourth-generation (4G) network includes an evolved NodeB (eNB). The device providing functions of a base station in a Wireless Local Area Network (WLAN) is an Access Point (AP). The device providing functions of a base station in NR is a next-generation node base station (gNB), and a next-generation evolved NodeB (ng-eNB), where the gNB communicates with a terminal device using NR, and the ng-eNB communicates with a terminal device using Evolved Universal Terrestrial Radio Access (E-UTRA), and both the gNB and the ng-eNB may be connected to a 5G core network. The network device in the embodiments of the present application also encompasses a device providing functions of a base station in future new communication systems, etc.

The terminal equipment/terminal device in the embodiments of the present application may refer to various forms of an access terminal, a subscriber unit, a subscriber station, a mobile station, a Mobile Station (MS), a remote station, a remote terminal, a mobile device, a user terminal, a wireless communication device, a user agent, or a user equipment.The terminal device may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal device in a future 5G network, or a terminal device in a future evolved Public Land Mobile Network (PLMN), etc. This is not limited in the embodiments of the present application.The terminal device may also be referred to as a user equipment (UE), a terminal, or the like.

As stated in background section, in real network configurations, parameters setting may be set unreasonable, which could prevent the terminal device from implementing handovers such as CHO and/or CPA/CPC successfully.

In the technical solutions of the present application, the terminal device is configured to report the first information, which assists the network side to promptly learn effectiveness of configuration parameters for a conditional handover in dual-connectivity, analyze existing problems in a conditional handover in dual-connectivity. The network side thus is enabled to adjust the parameter configuration in time to achieve reasonable configurations for a subsequent conditional handover in dual-connectivity and successfuly conditional handover in dual-connectivity by the terminal devices , further improving communication performance.

To make the above objectives, features, and advantages of the present application more comprehensible, the specific embodiments of the present application are illustrated in detail below with reference to the accompanying drawings.

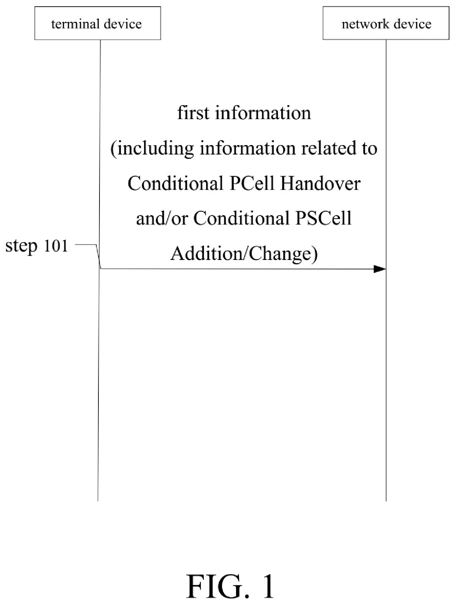

Referring to FIG. **1****,** the method provided in the present application specifically includes the following steps.

Step 101: A terminal device reports first information to a network device.

In the embodiment, the terminal device may be configured in dual-connectivity and be configured with Conditional PCell Handover and/or Conditional PSCell Addition/Change. That is, the terminal device reports the first information when it is accessed to the PCell and the PSCell.

Alternatively, the first information may include information related to Conditional PCell Handover and/or Conditional PSCell Addition/Change in a dual-connectivity scenario, but the cell to which the terminal device is accessed when the terminal device reports the first information is not configured in dual connectivity, or is not configured with Conditional PCell Handover and/or Conditional PSCell Addition/Change.In the embodiment, the network device will first determine the source serving cell corresponding to the first information after receiving the first information. The network device may analyze the first information to determine whether there is any problem with parameters for conditional handover in dual-connectivity previously configured for the terminal device, such as whether a threshold set in the handover condition for PCell is reasonable, whether a threshold set in the handover condition for PSCell is reasonable, and whether a duration of an entry condition of an event included in the handover condition is appropriate, etc..If there is a problem, the network device may adjust the corresponding parameters for subsequent configurations for mobility parameters of the terminal device, which improves mobility performance.

It should be noted that dual-connectivity used in the present application refers to a terminal device is simultaneously connected with two network devices or in two radio access network technologies. Specifically, a terminal device is simultaneously accessed to both PCell and PSCell. For example, the dual-connectivity can be the various forms of dual-connectivity in protocol TS37.340, as well as dual-connectivity to be introduced in 6G and future evolution systems. The present application does not pose limitation on it.It should be pointed out that numbering of each step in the embodiments does not pose limitation on execution order of each step.

It should be understood that in specific implementations, the communication methods may be implemented in software programs executing on processors integrated into chips or chip modules. The communication methods may also be implemented in a combination of hardware and software. The present application does not pose limitation on it.

In the embodiment, the terminal device accesses PCell, establishes a Radio Resource Control (RRC) connection, and then establishes a Data Radio Bearer (DRB) to begin data transmission. Specifically, the terminal device may establish one or more DRBs.

PCell can configure dual-connectivity for the terminal device based on service requirements of the terminal device, such as NR dual-connectivity (NR-DC).For mobility requirements, when the network device finds out that the terminal device supports conditional handover, the network device configures a conditional handover in dual-connectivity for the terminal device, such as CHO and CPA/CPC. That is, Conditional PSCell Addition/Change is included in configurations for Conditional PCell Handover.PCell may send a request for conditional handover to base stations to which one or more surrounding candidate PCells belong, to request for configuration of candidate PCell(s) and candidate PSCell(s).

In a specific application scenario, the network side has configured two sets of configurations for the terminal device.
1. Candidate primary cell PCell1 and a corresponding handover condition for PCell1, as well as candidate primary secondary cell PSCell1 and a corresponding handover condition for PSCell1;
2. Candidate primary cell PCell2 and a corresponding handover condition for PCell2, as well as candidate primary secondary cell PSCell2 and a corresponding handover condition for PSCell2.

That is, the network device has configured two cell groups for the terminal device, where the first cell group includes PCell1 and PSCell1, and the second cell group includes PCell2 and PSCell2.The network device (such as PCell) sends the configurations for the conditional handover in dual-connectivity configured by the network device to the terminal device. The terminal device begins to evaluate the candidate PCells and the candidate PSCells.The handover condition is also known as an execution condition for handover.For the uniformity and clarity of description, the condition for PSCell addition/change is also referred to as the handover condition for PSCell in the present application.

In a specific implementation, the terminal device may record the first information in the process of evaluation of candidate PCells and candidate PSCells.The terminal device reports the first information to the network device through higher-layer signaling.

According to actual evaluation results that may differ, there are various scenarios: success of a conditional handover in dual-connectivity, failure of a conditional handover in dual-connectivity, and failure of radio link (RLF).Among them, the failure of a conditional handover in dual-connectivity indicates that the terminal device failed to access the target cell successfully in the process of the conditional handover, and the failure of radio link indicates that there is a failure with the link between the terminal device and the source serving cell. Illustration will be provided below with reference to the first information in detail.

Embodiment 1, Scenario of success of a conditional handover in dual-connectivity: the first information includes one or more of: a first time instant when a candidate PCell satisfies the handover condition for PCell and a second time instant when a candidate PSCell satisfies the handover condition for PSCell, a time interval between the first time instant and the second time instant, a time interval between a third time instant when the candidate PCell satisfies the handover condition for PCell and the candidate PSCell satisfies the handover condition for PSCell and a fourth time instant when configurations for the Conditional Handover for candidate PCell and the Conditional Handover for candidate PSCell are received, a time interval between the first time instant and the fourth time instant, and a time interval between the second time instant and the fourth time instant.

In the embodiments of the present invention, the terminal device receives configurations for conditional handover for candidate PCell and conditional handover for candidate PSCell from the network device at time instant T4 (i.e., the fourth time instant).

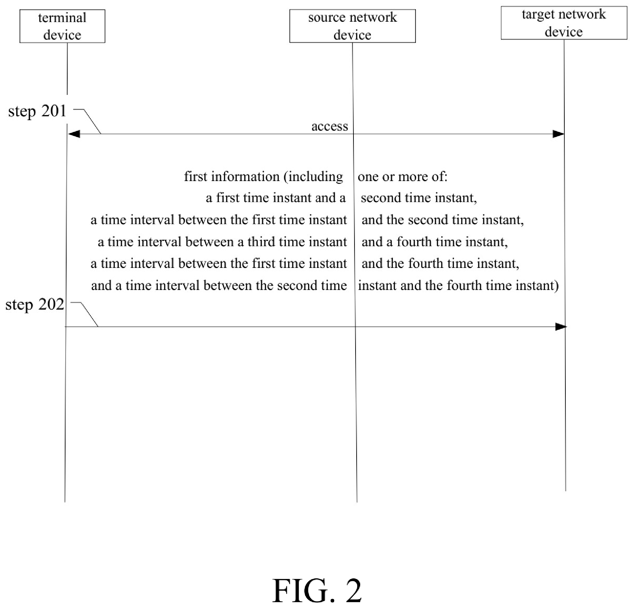

Referring to FIG. 2, at step 201, the terminal device prepares to access the target network device.

Specifically, in the process of evaluation, the terminal device finds out that PCell1 satisfies the execution condition for handover at time instant T1 (i.e. the first time instant), and that PSCell1 satisfies the execution condition for update at time instant T2 (i.e. the second time instant) and PCell1 satisfies the execution condition for handover throughout the duration from T1 to T2, where the time instant T1 is earlier than the time instant T2.The terminal device would access PCell1 and PSCell1 at or after time instant T2.

Alternatively, in the process of evaluation, the terminal device finds out that PCell1 satisfies the execution condition for handover and PSCell1 satisfies the execution condition for update simultaneously at time instant T3 (i.e., the third time instant). The terminal device would access PCell1 and PSCell1 at or after time instant T3.

At step 202, the terminal device reports first information to the network device.

When the terminal device finds out that both candidate PCell and candidate PSCell satisfy their corresponding handover conditions, it accesses the candidate PCell and candidate PSCell. The candidate PCell and the candidate PSCell then become the target PCell and target PSCell for the terminal device.In the process of access, the terminal device records the first information. Alternatively, the terminal device may first record the first information and then access the target PCell and the target PSCell.

After the terminal device is accessed to the target PCell and the target PSCell, the terminal device may report the first information.

As an example, the terminal device records the time instant T1 and the time instant T2 and reports the time instant T1 and the time instant T2 to the network device. The network device can obtain a difference value between the time instant T1 and the time instant T2, and optimize parameters related to subsequent conditional handovers in dual-connectivity based on the difference value.

As another example, the terminal device records the time instant T1 and the time instant T2, and calculates a time interval between the time instant T1 and the time instant T2.The terminal device reports the time interval to the network device.

As another example, the terminal device records the time instant T1 and the time instant T2, and calculates a time interval between the time instant T1 and the time instant T4, and a time interval between the time instant T2 and the time instant T4.The terminal device reports the above time intervals to the network device.

As another example, the terminal device records the time instant T3, and calculates a time interval between the time instant T3 and the time instant T4. and the terminal device reports the above time interval to the network device.

At step 202, since the conditional handover in dual-connectivity for the terminal device is successful, the terminal device may report the first information to the target network device after the handover through higher-layer signaling.

Embodiment 2, Scenario of failure of a conditional handover in dual-connectivity: the first information includes one or more of: information on quality of signal of the other corresponding cell when one of the handover condition for PCell and the handover condition for PSCell is satisfied; whether the handover condition for PCell is satisfied; whether the handover condition for PSCell is satisfied; reason for failure.

At step 301, the terminal device reports the first information.

Specifically, in the embodiments of the present invention, the failure of the conditional handover in dual-connectivity may be divided into three situations.

Situation 1. The candidate PCell satisfies the corresponding handover condition for PCell, while the candidate PSCell does not satisfy the corresponding handover condition for PSCell.

In this situation, the terminal device records information on quality of signal of the candidate PSCell.At step 302, the terminal device reports the information on quality of signal of the candidate PSCell to the network device.

For example, when the candidate primary cell PCell1 satisfies the corresponding handover condition for PCell at time instant T1, and the candidate primary secondary cell PSCell1 does not satisfy the corresponding handover condition for PSCell, the terminal device records information on quality of signal of PSCell1 at time instant T1.

Specifically, the information on quality of signal may include one or more of: a value of signal of the cell, a difference value between the value of the signal of the cell and a value of an entry condition of an event included in the handover condition, a duration for which the value of the signal of the cell has met the entry condition of the event included in the handover condition, and an expected time length to satisfaction of the handover condition, wherein the expected time length represents a difference value between the duration and a time length to trigger included in the handover condition.

For example, the handover condition for PSCell corresponding to PSCell1 configured by the network is that quality of signal of candidate PSCell1 is 2db higher than that of the serving PSCell, which needs to last for 80 milliseconds (ms) (i.e. TimeToTrigger is 80ms). At time instant T1, the quality of signal of PSCell 1 is 2db higher than that of the serving PSCell, which lasts for 20ms.Therefore, the terminal device may record the first information as follows: a value of signal of PSCell1, a difference value of 2db, a duration of 20ms, and an expected time length of 60ms.

Accordingly, the terminal device may also record the first information for the second cell group (PCell2 and PSCell2).That is, when PCell2 satisfies the corresponding handover condition for PCell, the terminal device records one or more of PSCell2 at time instant T1: a value of signal, a difference value, a duration, an expected time length, etc.

Furthermore, when the terminal device reports the first information, it may report information on quality of signal of PSCell1 and information on quality of signal of PSCell2 separately. The terminal device may also report the information on quality of signal of PSCell1 and PSCell2 together.

Furthermore, the terminal device may also record whether the handover condition for PCell is satisfied and/or whether the handover condition for PSCell is satisfied.For example, the terminal device may record the first information as follows: PCell1 satisfies the corresponding handover condition for PCell, PSCell1 does not satisfy the corresponding handover condition for PSCell, a value of signal of PSCell1, a difference value of 2db, a duration of 20ms, an expected time length of 60ms.

Situation 2. The candidate PCell does not satisfy the corresponding handover condition for PCell, while the candidate PSCell satisfies the corresponding handover condition for PSCell.

In this situation, the terminal device records information on quality of signal of the candidate PCell.At step 302, the terminal device reports the information on quality of signal of the candidate PCell to the network device.

For example, the candidate primary secondary cell PSCell1 satisfies the corresponding handover condition for PSCell (i.e., PSCell addition/change condition) at time instant T2, and the terminal device records the information on quality of signal of PCell1 at time instant T2.

For example, the handover condition for PCell corresponding to PCell1 is that quality of signal of candidate PCell1 is 2db higher than that of the serving PCell, and it needs to last for 80 milliseconds (ms). At time instant T2, the quality of signal of PCell1 is 2db higher than that of the serving PCell, which lasts for 20ms.Therefore, the terminal device may record the first information as follows: a value of signal of PCell1, a difference value of 2db, a duration of 20ms, and an expected time length of 60ms.

Accordingly, the terminal device may also record the first information for the second cell group (PCell2 and PSCell2).That is, when PSCell2 satisfies the corresponding handover condition for PSCell, the terminal device records one or more of PCell2 at time instant T2: a value of signal, a difference value, a duration, an expected time length, etc.

Furthermore, the terminal device may report the information on quality of signal of PCell1 and the information on quality of signal of PCell2 separately. The terminal device may also report the information on quality of signal of PCell1 and PCell2 together.

Furthermore, the terminal device may also record whether the handover condition for PCell is satisfied and/or whether the handover condition for PSCell is satisfied.For example, the terminal device may record the first information as follows: PSCell1 satisfies the corresponding handover condition for PSCell, PCell1 does not satisfy the corresponding handover condition for PCell, a value of signal of PCell1, a difference value of 2db, a duration of 20ms, and an expected time length of 60ms.

Situation 3. The candidate PCell does not satisfy the corresponding handover condition for PCell, and the candidate PSCell does not satisfy the corresponding handover condition for PSCell.

In this situation, the terminal device may record that the handover condition for PCell is not satisfied and/or the handover condition for PSCell is not satisfied.For example, the terminal device may record the first information as follows: PCell1 does not satisfy the corresponding handover condition for PCell, and PSCell1 does not satisfy the corresponding handover condition for PSCell.

Furthermore, in Embodiment 2, the first information may also include a reason for failure and/or indication information in case of a handover failure. The reason for failure includes absence of configuration for a separate handover command for the Conditional PCell Handover (i.e., PSCell is not included in the configuration for Conditional PCell Handover). The indication information is used to indicate that only the handover condition for PSCell is satisfied or only the handover condition for PCell is satisfied.

For example, PCell1 satisfies the corresponding handover condition for PCell at time instant T1, while PSCell1 does not satisfy the corresponding handover condition for PSCell. The network does not configure a separate handover command for CHO (i.e. CPC/CPA is not included in the configuration for Conditional PCell Handover).Thus, when a failure of handover occurs, the terminal device records the reason for failure as absence of configuration for a separate handover command for Conditional PCell Handover, or only the handover condition for PCell being satisfied.

For example, PSCell1 satisfies the corresponding handover condition for PSCell at time instant T2, while the candidate primary cell PCell1 does not satisfy the corresponding handover condition for PCell. Thus, when a failure of handover occurs, the terminal device records the reason for failure as only the handover condition for PSCell being satisfied.

Due to the failure of the conditional handover in dual-connectivity of the terminal device, the terminal device may trigger RRC re-establishment to reestablish communication with the network. Therefore, the terminal device may report the first information to the network device through higher-layer signaling. The terminal device may also temporarily interrupt communication with the network and enter an idle state during which the terminal device continues to save first information that is recorded. The terminal device would report the first information to the network device through higher-layer signaling when being accessed to the network again.

Embodiment 3, Scenario of failure of radio link: the first information includes one or more of: whether the handover condition for PCell is satisfied, whether the handover condition for PSCell is satisfied, quality of signal of the candidate PCell, quality of signal of the candidate PSCell, and a time interval between a satisfaction time instant when one of the handover condition for PCell and the handover condition for PSCell is satisfied and a fifth time instant when the failure of radio link occurs.

In this embodiment, the terminal device continuously evaluates candidate cells, but candidate PCell and candidate PSCell fail to satisfy their corresponding handover conditions within a certain period of time, resulting in the terminal device continuing to stay connected with the source serving cell. However, in some cases (such as when the terminal device moves to the edge of the cell), the terminal device encounters failure of radio link at the source serving cell.

The terminal device may record the first information at or after the fifth time instant when the failure of radio link occurs.

At step 401, the terminal device establishes an RRC connection with the network device. The terminal device may perform RRC re-establishment to resume connection with the network device. Alternatively, if the terminal device enters an idle state after a failure of radio link, the terminal device may initiate the RRC connection establishment process again to establish an RRC connection with the network device.

At step 402, the terminal device reports first information to the network device.That is, the terminal device reports the first information after a successful RRC re-establishment.

As an example, when candidate primary cell PCell1 satisfies the corresponding handover condition for PCell at time instant T1, and candidate primary secondary cell PSCell1 does not satisfy the corresponding handover condition for PSCell, the terminal device experiences a failure of radio link at time instant T5.The terminal device records time instant T1 and time instant T5, and reports time instant T1 and time instant T5 to the network device.

As another example, the terminal device records time instant T1 and time instant T5, calculates a time interval between time instant T1 and time instant T5, and reports the time interval to the network device.

In a non-limiting embodiment, there may be multiple time intervals between the satisfaction time instant(s) and the fifth time instant. The terminal device then reports the multiple time intervals to the network device.

For example, PCell1 satisfies the corresponding handover condition for PCell at time instant T1, while PSCell1 does not satisfy the corresponding handover condition for PSCell at time instant T1. After a certain period of time, PCell1 does not satisfy the corresponding handover condition for PCell at time instant T6, while PSCell1 satisfies the corresponding handover condition for PSCell at time instant T6. After another certain period of time, PCell1 satisfies the corresponding handover condition for PCell at time instant T7, while PSCell1 does not satisfy the corresponding handover condition for PSCell at time instant T7.Thus, the terminal device may calculate a time interval between time instant T1 and time instant T5, a time interval between time instant T6 and time instant T5, and a time interval between time instant T7 and time instant T5, and report the above three time intervals to the network device.

Furthermore, in Embodiment 3, the first information may also include a reason for failure and/or indication information in case of a failure of radio link. The reason for failure includes absence of configuration for a separate handover command for the Conditional PCell Handover. The indication information is used to indicate that only the handover condition for PScell is satisfied or only the handover condition for PCell is satisfied.

For example, PCell1 satisfies the corresponding handover condition for PCell at time instant T1, while PSCell1 does not satisfy the corresponding handover condition for PSCell. The network device does not configure a separate handover command for CHO (i.e. CPC/CPA is not included in the configuration for Conditional PCell Handover).Thus, when a failure of radio link occurs at the source side, the terminal device records the reason for failure as absence of configuration for a separate handover command for Conditional PCell Handover, or only the handover condition for PCell being satisfied.

For example, PSCell1 satisfies the corresponding handover condition for PSCell at time instant T2, while the candidate primary cell PCell1 does not satisfy the corresponding handover condition for PCell. Thus, when a failure of radio link occurs at the source side, the terminal device records the reason for failure as only the handover condition for PSCell being satisfied.

Furthermore, in Embodiment 3, the first information may also include whether the candidate PCell satisfies the handover condition and whether the candidate PSCell satisfies the handover condition at the time instant when the failure of radio link occurs. The terminal device may also record quality of signal of the candidate PCell and quality of signal of the candidate PSCell at this time instant respectively. If the candidate PCell satisfies an entry condition of an event corresponding to the handover condition, the terminal device may record a duration of the entry condition being satisfied or record an expected time length to satisfaction of the handover condition.

More specific implementations of the embodiments of the present application may be found with reference to the embodiments mentioned above, which will not be repeated herein.

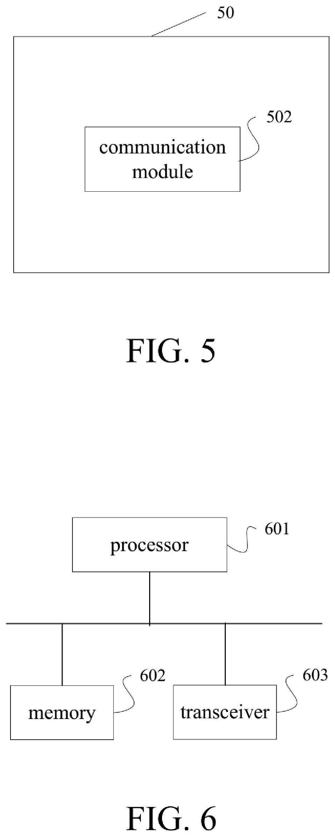

Refer to FIG. 5, FIG. 5 illustrates a communication apparatus 50. The communication apparatus 50 may comprise the following modules:
A communication module 501 is configured to report the first information.

In a specific implementation, the above communication apparatus 50 may correspond to a chip with functions of communication in a terminal device, such as a System-on-a-Chip (SoC) or a base-band chip; or correspond to a chip module with functions of communication included in a terminal device; or correspond to a chip module with functions of data processing; or correspond to a terminal device.

In another embodiment, the communication module 501 may be configured to receive first information.

In a specific implementation, the above communication apparatus 50 may correspond to a chip with functions of communication in a network device, such as an SoC or a base-band chip; or correspond to a chip module with functions of communication included in a network device; or correspond to a chip module with functions of data processing; or correspond to a network device.

Other relevant descriptions of the communication apparatus 50 may be found with reference to relevant descriptions in the embodiments mentioned above, which will not be repeated herein.

Regarding the various modules/units included in various apparatuses and products described in the above embodiments, they may be software modules/units, hardware modules/units, or partly software modules/units and partly hardware modules/units.For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

An embodiment of the present application also discloses a storage medium, which is a computer-readable storage medium and has computer programs stored thereon. The computer programs, when executed, may cause the steps of the method shown in the embodiments mentioned above to be performed.The storage medium may include a Read-Only Memory (ROM), a Random Access Memory (RAM), a magnetic disk, or an optical disk and the like. The storage medium may also include a non-volatile memory or a non-transitory memory, etc.

Referring to FIG. 6, an embodiment of the present application further provides a schematic diagram of a hardware structure of a communication apparatus. The communication apparatus comprises a processor 601, a memory 602 and a transceiver 603.

The processor 601 may be a general-purpose central processing unit (CPU), a micro-processor, an application-specific integrated circuit (ASIC), or one or more integrated circuits for management of executing the programs of the solutions of the present application. The processor 601 may also include multiple CPUs, and may be either a single-CPU processor or a multi-CPU processor. The term "processor" herein may refer to one or more devices, circuits, or processing cores which processes data (such as computer program instructions).

The memory 602 may be a ROM or other type of static storage device capable of storing static information and instructions, a RAM or other type of dynamic storage device capable of storing information and instructions, electrically erasable programmable read-only memory (EEPROM), compact-disc read-only memory (CD-ROM) or other optical-disc storage, optical-disk storage (including a compressed optical disk, a laser disk, an optical disk, a Digital Versatile Disk, a Blu-ray disk, etc.), a magnetic-disk storage medium or other magnetic storage device, or any other medium capable of carrying or storing desired program codes in the form of instructions or data structures and accessible by a computer. The embodiments of the present application do not pose limitation thereon.The memory 602 may be standalone (in this case, the memory 602 may be located external or internal to the communication apparatus), or may be integrated with the processor 601.Among them, the memory 602 may contain computer program codes.The processor 601 is configured to execute computer program codes stored in the memory 602, thereby implementing the method provided in the embodiments of the present application.

The processor 601, the memory 602, and the transceiver 603 are connected through a bus.The transceiver 603 is configured to communicate with other devices or communication networks. Alternatively, the transceiver 603 may include a transmitter and a receiver. The device configured to implement receiving function in the transceiver 603 may be regarded as a receiver, which is configured to perform receiving steps in the embodiments of the present application. The device configured to implement transmitting function in the transceiver 603 may be regarded as a transmitter, which is configured to perform transmitting steps in the embodiments of the present application.

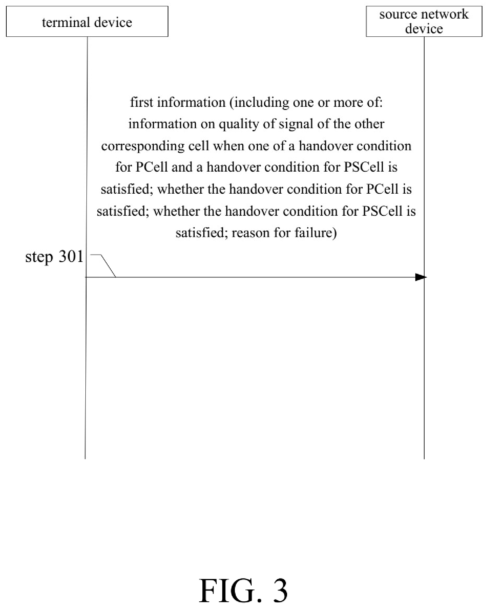

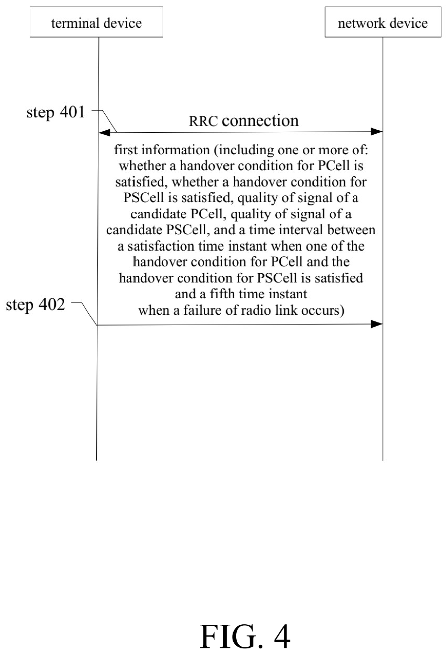

When the schematic structure diagram shown in FIG. 6 is used to illustrate a structure of the terminal device involved in the above embodiments, the processor 601 is configured to control and manage actions of the terminal device. For example, the processor 601 is configured to support the terminal device in performing step 101 in FIG. 1, or steps 201 and 202 in FIG. 2, or step 301 in FIG. 3, or steps 401 and 402 in FIG. 4, and/or actions performed by the terminal device in other processes described in the embodiments of the present application. The processor 601 may communicate with other network entities (e.g., the above network device) via the transceiver 603.The memory 602 is configured to store program codes and data of the terminal device.The processor may control the transceiver 603 to send/receive RRC signaling when running the computer programs.

When the schematic structure diagram shown in FIG. 6 is used to illustrate a structure of the network device involved in the above embodiments, the processor 601 is configured to control and manage actions of the network device. For example, the processor 601 is configured to support the network device in performing step 101 in FIG. 1, or steps 201 and 202 in FIG. 2, or step 301 in FIG. 3, or steps 401 and 402 in FIG. 4, and/or actions performed by network device in other processes described in the embodiments of the present application. The processor 601 may communicate with other network entities (e.g., the above terminal device) via the transceiver 603.The memory 602 is configured to store program codes and data of the network device. The processor may control the transceiver 603 to send/receive RRC signaling when running the computer programs.

The unidirectional communication link from an access network to a terminal device is defined as downlink in the embodiments of the present application, data transmitted on the downlink is defined as downlink data, and the transmission direction of the downlink data is defined as downlink direction. The unidirectional communication link from a terminal device to an access network is defined as uplink in the embodiments of the present application, data transmitted on the uplink is defined as uplink data, and the transmission direction of the uplink data is defined as uplink direction.

It should be understood that, in the present application, the term "and/or" merely describes a relationship between related objects, indicating that there may be three relationships. For example, A and/or B may indicate: A alone, both A and B, or B alone. In addition, the character "/" in the specification indicates that the related objects before and after it are in an "or" relationship.

The term "a plurality of" in the embodiments of the present application means two or more.

The descriptions such as first and second in the embodiments of the present application are for purposes of illustration and distinguishing of the described objects, there is no sequential order, and do not represent any special limitation on the number of devices in the embodiments of the present application, and may not constitute any limitation on the embodiments of the present application.

The term "connection" as used in the embodiments of the present application refers to various forms of connection which enables communication between devices, such as direct connection or indirect connection. The embodiments of the present application do not pose limitation thereon.

The above embodiments may be implemented in whole or in part in software, hardware, firmware, or any other combination thereof. When implemented using software, the above embodiments may be implemented in whole or in part in the form of a computer program product. The computer program product includes one or more computer instructions or computer programs.When the computer instructions or computer programs are loaded and executed on a computer, the processes or functions described in the embodiments of the present application are generated in whole or in part. The computer may be a general-purpose computer, a special-purpose computer, a computer network, or other programmable devices.The computer instructions may be stored in a computer-readable storage medium or transmitted from one computer-readable storage medium to another computer-readable storage medium. For example, the computer instructions may be transmitted from a website, computer, server, or data center to another website, computer, server, or data center via wired or wireless means.

It should be understood that in the various embodiments of the present application, the numbers of the processes do not imply the order of execution. The execution order of the processes should be determined by their functions and internal logic, and should not constitute any limitation on the implementation process of the embodiments of the present application.

In the several embodiments provided in the present application, it should be understood that the disclosed methods, apparatuses, and systems may be implemented in other ways.For example, the apparatus embodiments described above are merely illustrative; for example, the division of units is only a logical function division, and in actual implementation, there may be other division methods; for example, multiple units or components may be combined or integrated into another system, or some features may be ignored or not executed. In addition, the coupling or direct coupling or communication connection between each other shown or discussed may be indirect coupling or communication connection through some interfaces, apparatuses, or units, and may be electrical, mechanical, or other forms.

The units described as separate components may or may not be physically separated, and the components displayed as units may or may not be physical units, that is, they may be located in one place, or may be distributed to multiple network units. Some or all of the units may be selected according to actual needs to achieve the purpose of the solutions of the embodiments.

In addition, the functional units in the various embodiments of the present application may be integrated into one processing unit, or each unit may exist alone physically, or two or more units may be integrated into one unit. The above integrated units may be implemented in the form of hardware or in the form of hardware plus software functional units.

The integrated units implemented in the form of software functional units may be stored in a computer-readable storage medium.The software functional units are stored in a storage medium and include several instructions to cause a computer device (which may be a personal computer, server, or network device, etc.) to perform some of the steps of the methods described in the various embodiments of the present application.

Although the present application is disclosed as above, the present application is not limited thereto.Any person skilled in the art may make various changes and modifications without departing from the spirit and scope of the present application. Therefore, the protection scope of the present application shall be subject to the scope defined by the claims.

## Claims

1. A communication method, **characterized in that** the communication method comprises:
reporting first information, the first information including information related to Conditional PCell Handover and/or Conditional PSCell Addition/Change in a dual-connectivity scenario.

2. The communication method according to claim 1, **characterized in that** the first information includes one or more of: a first time instant when a candidate PCell satisfies a handover condition for PCell and a second time instant when a candidate PSCell satisfies a handover condition for PSCell, a time interval between the first time instant and the second time instant, a time interval between a third time instant when the candidate PCell and the candidate PSCell satisfy their respective handover conditions and a fourth time instant when configurations for the Conditional PCell Handover and Conditional PSCell Handover are received, a time interval between the first time instant and the fourth time instant, and a time interval between the second time instant and the fourth time instant.

3. The communication method according to claim 1, **characterized in that** the first information includes information on quality of signal of the other corresponding cell when one of a handover condition for PCell and a handover condition for PSCell is satisfied.

4. The communication method according to claim 3, **characterized in that** the first information includes information on quality of signal of a candidate PSCell at a time instant when a candidate PCell satisfies the handover condition for PCell; or the first information includes information on quality of signal of a candidate PCell at a time instant when a candidate PSCell satisfies the handover condition for PSCell.

5. The communication method according to claim 3, **characterized in that** the information on quality of signal of the cell includes one or more of: a value of signal of the cell, a difference value between the value of the signal of the cell and an entry condition of an event included in a handover condition, a duration for which the value of the signal of the cell has met the entry condition of the event included in the handover condition, and an expected time length to satisfaction of the handover condition, wherein the expected time length represents a difference value between the duration and a time length to trigger included in the handover condition.

6. The communication method according to claim 1, **characterized in that** the first information includes whether a handover condition for PCell is satisfied and/or whether a handover condition for PSCell is satisfied in case of a failure of radio link or a failure of handover.

7. The communication method according to claim 6, **characterized in that**, the first information includes a satisfaction time instant when one of the handover condition for PCell and the handover condition for PSCell is satisfied, a fifth time instant when the failure of radio link occurs, and/or a time interval between the satisfaction time instant and the fifth time instant.

8. The communication method according to claim 1, **characterized in that**, the first information includes a reason for failure and/or indication information in case of a failure of radio link or a failure of handover, the reason for failure including absence of configuration for a separate handover command for the Conditional PCell Handover, and the indication information indicating that only the handover condition for PSCell is satisfied or only the handover condition for PCell is satisfied.

9. The communication method according to claim 1, **characterized in that** configurations for a conditional handover in dual-connectivity includes one or more groups of cells, each group of cells includes at least one candidate PCell and at least one candidate PSCell;
wherein reporting the first information comprises:
reporting first information for at least one group of cells.

10. The communication method according to any one of claims 1 to 9, **characterized in that** reporting the first information comprises:
sending higher-layer signaling, the higher-layer signaling includes the first information.

11. A communication method, **characterized in that** the communication method comprises:
receiving first information, the first information including information related to Conditional PCell Handover and/or Conditional PSCell Addition/Change in a dual-connectivity scenario.

12. The communication method according to claim 11, **characterized in that** the first information includes one or more of: a first time instant when a candidate PCell satisfies a handover condition for PCell and a second time instant when a candidate PSCell satisfies a handover condition for PSCell, a time interval between the first time instant and the second time instant, a time interval between a third time instant when the candidate PCell and the candidate PSCell satisfies their respective handover conditions and a fourth time instant when configurations for the Conditional PCell Handover and Conditional PSCell Handover are received, a time interval between the first time instant and the fourth time instant, and a time interval between the second time instant and the fourth time instant.

13. The communication method according to claim 11, **characterized in that** the first information includes information on quality of signal of the other corresponding cell when one of a handover condition for PCell and a handover condition for PSCell is satisfied.

14. The communication method according to claim 11, **characterized in that** the first information includes whether a handover condition for PCell is satisfied and/or whether a handover condition for PSCell is satisfied in case of a failure of radio link or a failure of handover.

15. The communication method according to claim 11, **characterized in that** the first information includes a reason for failure and/or second indication information in case of a failure of radio link or a failure of handover, the reason for failure including absence of configuration for a separate handover command for the Conditional PCell Handover , and the second indication information indicating that only the handover condition for PSCell is satisfied or only the handover condition for PCell is satisfied.

16. A communication apparatus, **characterized in that** the communication apparatus comprises:
a communication module configured to report first information, the first information including information related to Conditional PCell Handover and/or Conditional PSCell Addition/Change in a dual-connectivity scenario.

17. A communication apparatus, **characterized in that** the communication apparatus comprises:
a communication module configured to receive first information, the first information including information related to Conditional PCell Handover and/or Conditional PSCell Addition/Change in a dual-connectivity scenario.

18. A computer-readable storage medium having computer programs stored thereon, **characterized in that** the computer programs, when executed by a processor, cause the steps of the communication method according to any one of claims 1 to 15 to be performed.

19. A communication apparatus, comprising a memory and a processor, wherein the memory stores computer programs executable on the processor thereon, **characterized in that** the computer programs, when executed by the processor, cause the steps of the communication method according to any one of claims 1 to 10 to be performed.

20. A communication apparatus, comprising a memory and a processor, wherein the memory stores computer programs executable on the processor thereon, **characterized in that** the computer programs, when executed by the processor, cause the steps of the communication method according to any one of claims 11 to 15 to be performed.
